Europäisches Patentamt

European Patent Office

Office européen des brevets

(19)

(11) Numéro de publication: **0 011 035**
**A1**

(12) # DEMANDE DE BREVET EUROPEEN

(21) Numéro de dépôt: **79400803.7**

(22) Date de dépôt: **26.10.79**

(51) Int. Cl.³: **H 04 M 1/274**

(30) Priorité: **26.10.78 FR 7830506**

(43) Date de publication de la demande: **14.05.80**
**Bulletin 80/10**

(84) Etats contractants désignés: **BE CH DE GB IT LU NL SE**

(71) Demandeur: **COMPAGNIE FRANCAISE DES CABLES TELEGRAPHIQUES, 7, rue du 4 Septembre, F-75002 Paris (FR)**

(72) Inventeur: **Lhuillier, Daniel, 2, Place Franz Liszt, F-75010 Paris (FR)**

(74) Mandataire: **Martinet, René et al, Cabinet Martinet 62, rue des Mathurins, F-75008 Paris (FR)**

(54) Composeur automatique de numéros téléphoniques à microordinateur.

(57) Composeur de numéros téléphoniques d'abonnés et de postes publics d'un réseau de transmission de données, comprenant des moyens d'établir et de rompre la boucle d'une ligne téléphonique, des moyens de fournir sur une borne de sortie au moins un signal continue quand le poste téléphonique reçoit une tonalité quelconque à identifier et une borne d'entrée pour la commande des moyens d'établissement et de rupture de boucle, et un microordinateur recevant et échantillonnant ledit signal continu et fournissant des signaux de commande à ladite borne d'entrée. Il est caractérisé en ce qu'il identifie les tonalités interrompues en recherchant dans qu'elle surface prédéterminée du plan x=E (durée de l'impulsion de tonalité) y=S (durée du silence entre deux impulsions de tonalité) se trouve le point représentatif de la cadence de la tonalité.

EP 0 011 035 A1

1

## COMPOSEUR AUTOMATIQUE DE NUMEROS TELEPHONIQUES A MICROORDINATEUR.

La présente invention concerne un émetteur automatique d'appels ou composeur de numéros téléphoniques, capable d'effectuer l'appel du numéro téléphonique d'un abonné ou du numéro d'un poste public de transmission de données parmi une pluralité de tels numéros conservés en mémoire.

Les composeurs téléphoniques d'appels doivent être aptes à reconnaître les tonalités envoyées par le central de rattachement sur la ligne téléphonique pendant l'établissement d'une communication. Ces tonalités sont des signaux à fréquences vocales pures, mélangées ou modulées à très basse fréquence, permanents ou interrompus. Leurs fréquences et leurs cadences dans le cas des tonalités interrompues ou ruptées sont très variables selon les pays. Le tome II, 2 du Comité Consultatif International Télégraphique et Téléphonique (livre orange), supplément N° 4, pages 246 à 262 donne dans trois tableaux, la forme d'onde selon les pays de la tonalité de retour d'appel, de la tonalité d'occupation et des autres tonalités. A cause du fait que les fréquences d'une même tonalité sont différentes selon les pays et du fait que la même fréquence est parfois utilisée pour deux tonalités distinctes qui ne diffèrent plus alors entre elles que par leur cadence, il n'est pas possible de reconnaître complètement une tonalité par la seule analyse de sa fréquence comme le font certains émet-

2

teurs automatiques d'appels de l'art antérieur.

D'autres émetteurs automatiques d'appels de l'art antérieur se bornent à distinguer les tonalités permanentes des tonalités interrompues. Cette distinction est insuffisante pour reconnaître complètement la phase d'une communication téléphonique en cours de déroulement. Dans beaucoup de pays en effet la tonalité de retour d'appel et la tonalité d'occupation ont la même fréquence et sont toutes deux interrompues et elles ne diffèrent entre elles que par la cadence d'interruption.

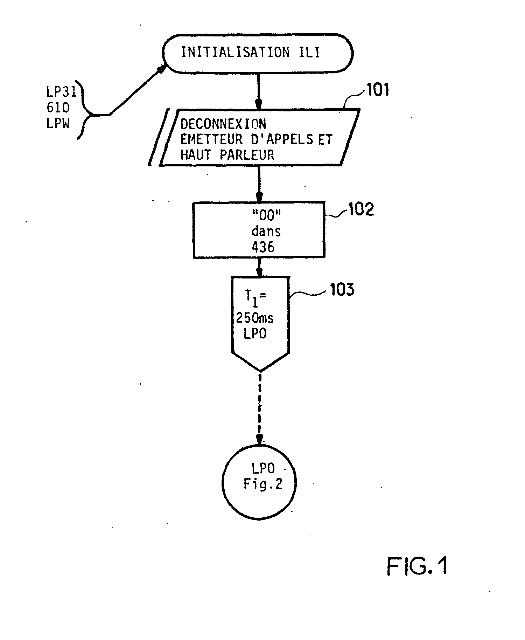

L'avis E.180 du Comité Consultatif International Télégraphique et Téléphonique, Tome II, 2, pages 71 - 74 détermine pour la tonalité de retour d'appel et pour la tonalité d' occupation des cadences recommandées et des cadences acceptées. Ces cadences déterminent des aires sur un graphique obtenu en portant en abscisse les durées d'émission de la tonalité proprement dite et en ordonnée les durées des silences. On voit sur la Fig. 1 / E.180 de la page 72 que, pour la tonalité de retour d'appel recommandée, la durée d'émission est comprise entre 0,67 s et 2,5 s et la durée de silence est comprise entre 3 s et 5 s et que, pour la tonalité de retour d'appel acceptée, la durée d'émission est comprise entre 0,67 s et 2,5 s et la durée de silence entre 3 s et 6 s.

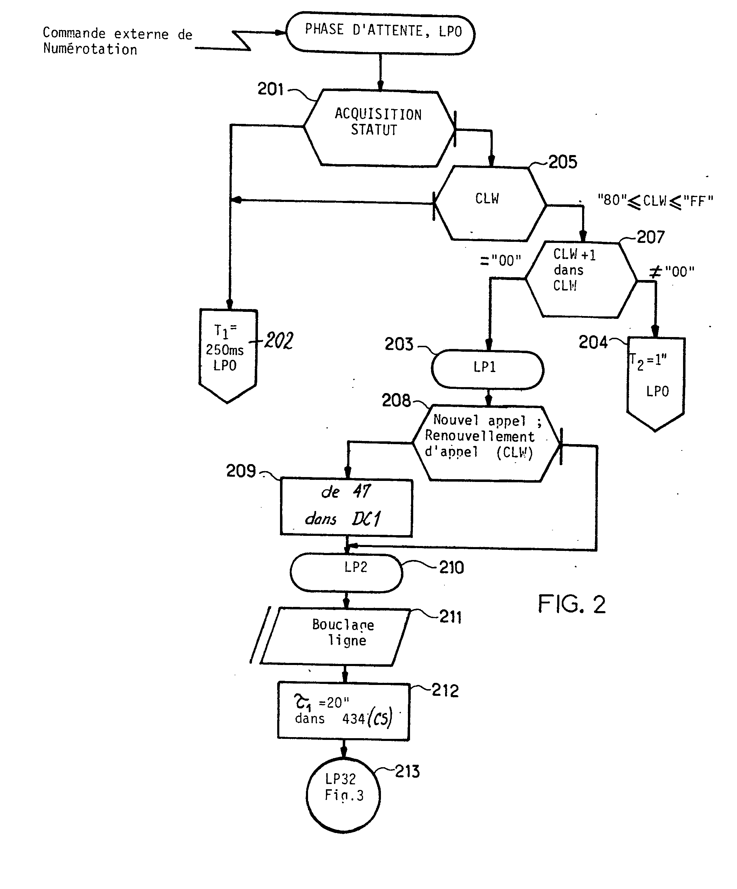

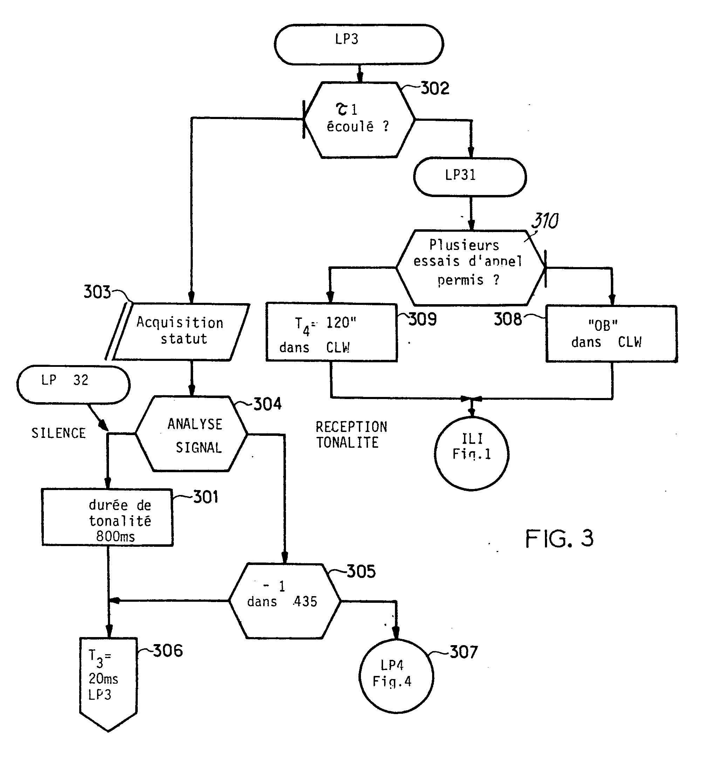

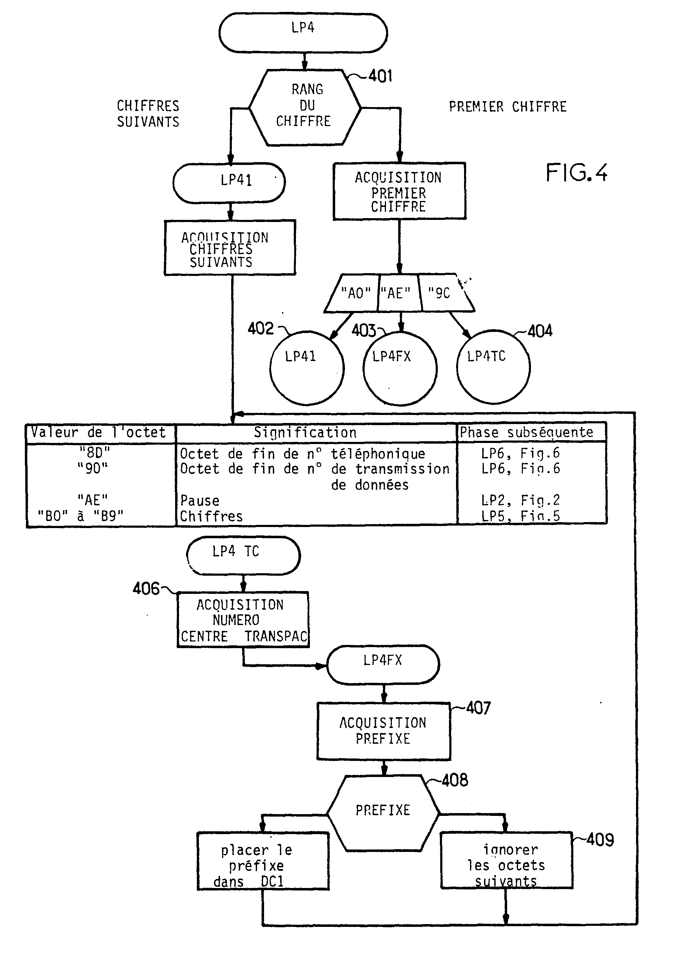

La cadence de la tonalité d'occupation en appelant ainsi la tonalité d'occupation de la ligne du demandé, et la tonalité d'encombrement de l'équipement ou du faisceau de circuits est défini dans la Fig. 2 / E.180 de la page 73. Les valeurs recommandées de E ( durée d'émission ) et de S ( durée de silence ) sont comprises dans un quadrilatère défini par les quatre droites

$$E = 1,5 \ S$$

$$E = 0,67 \ S$$

$$E + S = 300 \text{ ms.}$$

$$E + S = 1100 \text{ ms.}$$

Les valeurs acceptées de E et S sont comprises dans un quadrilatère défini par les quatre droites

$$E = 100 \text{ ms}$$

$$E = 0,67 \text{ ms}$$

$$E + S = 1100 \text{ ms}$$

$$E = (E + S)/2 - 250 \text{ ms}$$

Le composeur de numéros téléphoniques comprend essentiellement un émetteur automatique d'appels et un micro-ordinateur comportant un micro-processeur. L'émetteur automatique d'appels comprend des moyens de bouclage de la ligne téléphonique, trois bornes de sortie et au moins une borne d'entrée, des moyens de fournir sur la première borne de sortie un premier signal continu quand le poste téléphonique reçoit un courant de sonnerie, sur la seconde borne de sortie un second signal continu quand le poste téléphonique est décroché, sur la troisième borne de sortie un troisième signal continu quand le poste téléphonique reçoit une tonalité quelle qu'elle soit, et sur la borne d'entrée un signal de commande desdits moyens de bouclage de ligne et des impulsions de numérotation. Le micro-ordinateur reçoit par l'intermédiaire d'une interface les signaux continus de sortie. Toute tonalité (période d'émission ) reçue en ligne à un niveau supérieur à une valeur prédéterminée par le réglage d'un amplificateur est convertie en un niveau logique "O" permanent. Toute période de silence est par contre convertie en une suite de "1" logiques mais qui peut être parsemée de "O" logiques correspondant à des bruits présents sur la ligne.

Conformément à la caractéristique principale de l'invention, une tonalité permanente n'est interprétée comme telle

4

par l'ordinateur que si la durée de la période d'émission de la tonalité dépasse un seuil fixé. Si un silence apparaît au cours de la durée d'émission, la durée déjà comptée est effacée et le compte est recommencé. Les tonalités continues succèdant à la numérotation (tonalité de modem par exemple ) doivent avoir une durée suffisamment longue pour les distinguer des tonalités ruptées les plus longues ( retour d'appel ).

Les tonalités discontinues faites d'une suite de silences $S_0$, $S_1$, $S_2$ et de signaux $E_0$, $E_1$ de la forme

$$S_0, E_0, S_1, E_1, S_2$$

sont mesurées en durée sur trois périodes successives $E_0$ (période d'émission), $S_1$ (période de silence) et $E_1$ (période d'émission), le début de la période de silence $S_2$ marquant la fin des mesures. Si chacune des trois périodes $E_0$, $S_1$, $E_1$ a une durée significative, c'est-à-dire supérieure à des seuils respectifs prédéterminés, on en déduit selon les cas que l'émetteur automatique d'appels reçoit une tonalité de retour d'appel ou une tonalité d'occupation ou une modulation vocale de parole.

Le composeur de numéros téléphoniques de l'invention exécute très rapidement et silencieusement les phases de son programme. Afin de tenir l'opérateur au courant desdites phases, le composeur de numéros téléphoniques comprend un haut parleur qui est mis en service par le micro-ordinateur lors de certaines phases pour faire entendre les tonalités à l'opérateur et lui faire savoir soit que l'appel a abouti, soit que l'appel n'ayant pas abouti, l'appareil va le renouveler.

Dans la description de détail à suivre, les comparaisons des périodes d'émission et des périodes de silence des tonalités interrompues seront faites par rapport à des valeurs paramétriques de temps. De même, on donnera des valeurs paramétriques aux intervalles de temps pendant lesquels un évènement est attendu ou n'est pas attendu. Pour les besoins de cette description des exemples de valeurs de paramètres seront donnés. Mais il

5

doit être entendu que ces valeurs ne sont données qu'à titre d'exemple et qu'elles peuvent être facilement changées en insérant d'autres valeurs dans les registres du micro-ordinateur.

L'invention va être maintenant décrite en détail en relation avec les dessins annexés, dans lesquels :

- la Fig. 1 représente l'algorithme de la phase d'initialisation de l'ordinateur ;

- la Fig. 2 représente l'algorithme des phases d'attente et de lecture des numéros ;

- la Fig. 3 représente l'algorithme de la phase d'analyse des tonalités d'avant numérotation ;

- la Fig. 4 représente l'algorithme de la phase d'analyse du numéro ;

- la Fig. 5 représente l'algorithme de la phase de numérotation;

- la Fig. 6 représente l'algorithme de la phase d'analyse des tonalités d'après numérotation (première partie ) ;

- la Fig. 7 représente l'algorithme de la phase d'analyse des tonalités d'après numérotation (deuxième partie ) ;

- la Fig. 8 représente l'algorithme de la phase de mesure de la durée des périodes de silence ;

- la Fig. 9 représente l'algorithme de la phase de mesure de la durée des périodes de signal de tonalité ;

- la Fig. 10 représente l'algorithme de la phase d'analyse globale des tonalités interrompues ;

- la Fig. 11 est le schéma électronique de l'émetteur automatique d'appels compris dans le composeur de numéros téléphoniques ;

- la Fig. 12 représente la forme d'onde des signaux de sortie de l'émetteur automatique d'appels ;

6

- la Fig. 13 représente sous la forme d'un diagramme de blocs le micro-ordinateur compris dans le composeur de numéros téléphoniques ;

- la Fig. 14 représente les fonctions des registres compteurs du micro-ordinateur selon les phases du programme ;

- la fig. 15 est un schéma montrant le mode de distinction entre l'occupation de la ligne due à la connexion et l'occupation de la ligne due au décrochage du combiné ; et

- les Figs. 16 et 17 ne sont autres que les Figs. 1 / E.180 et 2 / E.180 de l'avis E.180 du Comité Consultatif International Télégraphique et Téléphonique.

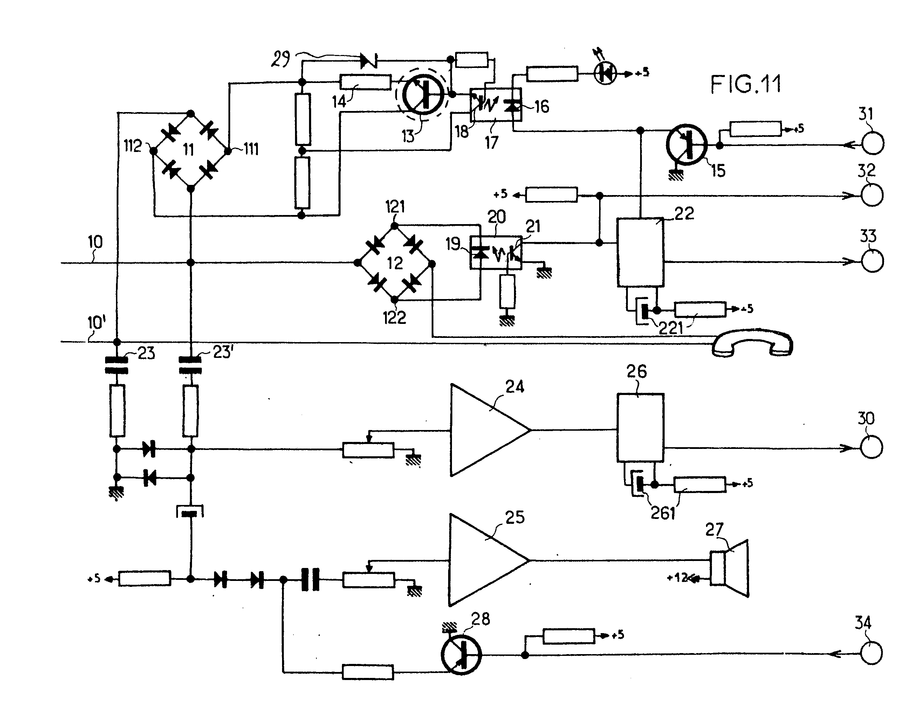

En se référant d'abord à la Fig. 11, la ligne téléphonique 10 - 10' est reliée vers la gauche à un central téléphonique ou à un commutateur public de transmission de données par l'intermédiaire ou non d'un modem et vers la droite du poste téléphonique. Dans la ligne 10 - 10' sont insérés un premier pont de redresseurs 11 en parallèle sur les fils de ligne et un second pont de redresseurs 12 en série sur le Fil 10. Les bornes 111 - 112 du pont de redresseurs 11 sont reliées à l'émetteur et au collecteur d'un transistor 13 par l'intermédiaire d'une résistance 14 de façon que lorsque le transistor 13 est passant, la ligne est fermée avec une intensité limitée par le réseau, résistance 14, diode Zener 29, transistor 13, et que lorsque le transistor 13 est bloqué, la ligne est ouverte. La base du transistor 13 est commandée par des impulsions de rupture de boucle appliquées à la borne d'entrée 31. Elles bloquent le transistor 15 dont le circuit émetteur – collecteur contient une diode électroluminescente 16 faisant partie d'un coupleur opto – électronique 17. Le phototransistor 18 de ce coupleur opto – électronique commande la base du transistor 13.

Les bornes 121 – 122 du pont de redresseurs 12 sont reliées à une diode électroluminescente 19 formant partie d'un coupleur opto-électronique 20. Le phototransistor 21 de ce coupleur opto-électronique est relié d'une part directement à la borne de sortie 32 et d'autre part à la borne de sortie 33 par l'intermédiaire d'une bascule monostable à redéclenchement 22. La durée de basculemen    ¹st fixée par le circuit RC 221. On recueille sur la borne 33 un signal continu quand le signal de sonnerie est appliqué à la ligne 10 – 10'.

On recueille sur la borne 32 un signal quand le poste téléphonique est décroché ou quand une impulsion de connexion due à l'inversion de polarité sur la ligne se produit.

La ligne téléphonique 10 – 10' est reliée par les condensateurs 23-23' à l'entrée d'un amplificateur écrêteur de tension 24 et d'un amplificateur 25 de haut-parleur. La sortie de l'amplificateur 24 est reliée à une bascule monostable rédéclenchable 26, elle-même reliée à la borne de tonalité 30. La durée de basculement est fixée par le circuit RC 261. C'est le signal de tonalité apparaissant sur la borne de sortie 30 qui est analysé par l'ordinateur.

L'émetteur automatique d'appels comprend un haut-parleur 27 recevant le signal de ligne par l'amplificateur 25 et dont la marche et l'arrêt sont commandés par la borne 34 à travers le transistor 28.

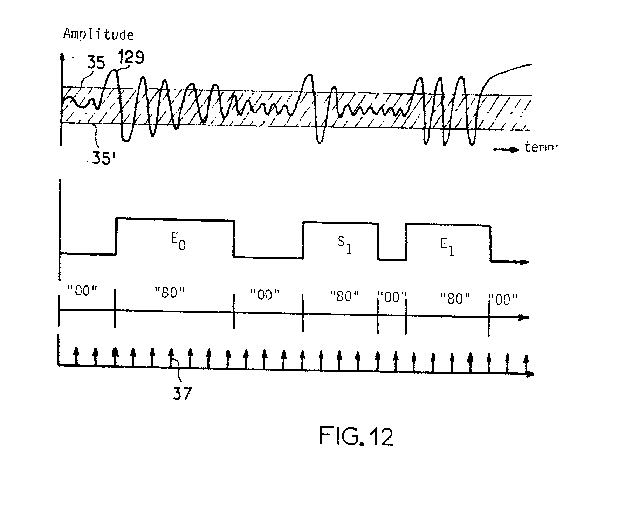

La Fig. 12 représente la conversion du signal analogique de ligne en signal digital par l'amplificateur 24 et la bascule monostable 26. Le signal analogique 129 est détecté aux niveaux 35 et 35' et comme la période du signal reçu est inférieure à la durée de basculement, on obtient les impulsions $E_0$, $S_1$, $E_1$,... Ces impulsions sont échantillonnées par l'ordinateur grâce aux impulsions d'échantillonnage 37 et celui-ci inscrit 00 ou 80 en numération héxadécimale dans un octet de statut c'est-à-dire $[0000,\ 0000]$ ou $[1000,\ 0000]$

8  0011035

en héxadécimal codé binaire selon que l'échantillon est égal à 0 ou à 1.

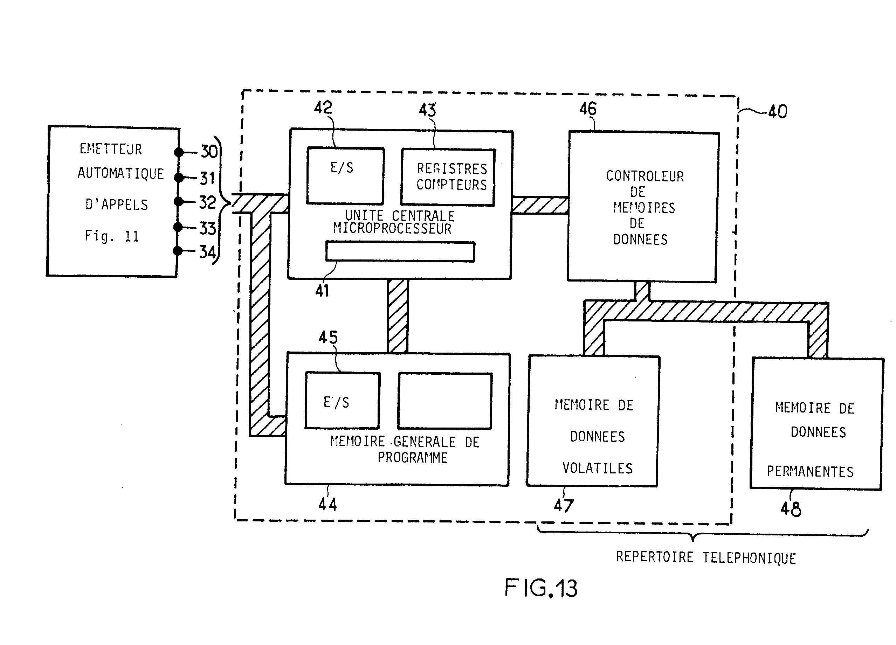

Les bornes 30 à 34 de l'émetteur automatique d'appels sont reliées à un micro-ordinateur 40 (Fig. 13) comprenant un micro-processeur 41, des circuits d'entrée-sortie 42 et 45 et des registres – compteurs 43.

L'ordinateur 40 contient également une mémoire générale de programme 44. Le microprocesseur 41 est relié à un contrôleur de mémoire de données 46 et à deux mémoires de données, l'une de données volatiles 47 et l'autre de données semi – permanentes 48 qui forment le répertoire téléphonique.

Les registres – compteurs 43 comprennent huit registres – compteurs 430 à 437 dont les fonctions seront vues dans la suite. Ces fonctions varient avec la phase du programme qui est en cours de déroulement.

Le microprocesseur travaille sur octets et en numérotation héxadécimale. Dans la suite on désignera par

$$0, 1, 2, 3, 4, 5, 6, 7, 8, 9, A, B, C, D, E, F,$$

les seize chiffres héxadécimaux. On rappelle qu'en numérotation héxadécimale les différents chiffres d'un nombre sont compris entre 0 et F et sont les coefficients de puissances de 16. Par exemple

$$13 F 4 = 1 \times 16^3 + 3 \times 16^2 + F \times 16^1 + 4 \times 16^0$$
$$80 = 8 \times 16^1 + 0 \times 16^0 = \text{(en binaire)} \ 1\ 000\ 0000 = \text{(en décimal)} \ 128$$
$$40 = 4 \times 16^1 + 0 \times 16^0 = \text{(en binaire)} \ 0100\ 0000 = \text{(en décimal)} \ 64$$

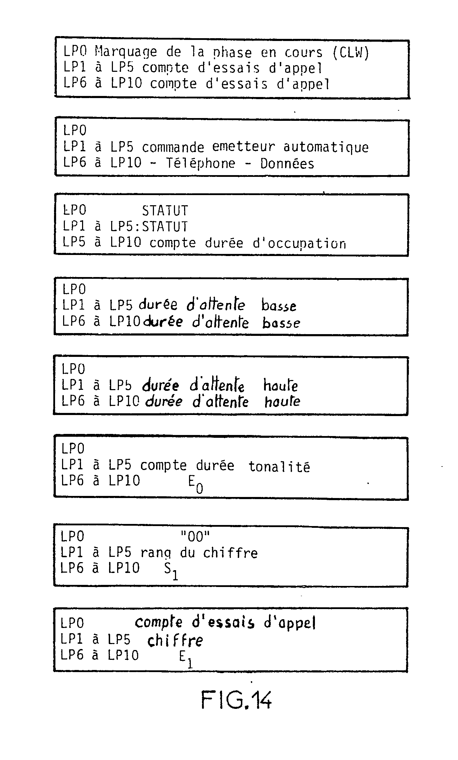

L'ordinateur échantillonne toutes les 4 ms les signaux fournis par l'émetteur automatique d'appels et apparaissant sur les bornes 30 (TONALITE), 32 (DECROCHAGE) et 33 (SONNERIE). Le résultat des échantillonnages est inscrit au poids héxadécimal 80 pour le signal de tonalité (bit d'ordre 7), au poids héxadécimal 40 pour le signal de décrochage (bit d'ordre 6) et au poids héxadécimal 20 (bit d'ordre 5) pour le signal de sonnerie dans un registre de statut. Les autres positions de ce registre sont mises à zéro. Ce registre de statut est, pendant les phases LP0 à LP5 incluses, le registre 432 de la Fig. 14

L'ordinateur envoie des ordres de commande sur les bornes 31 et 34 de l'émetteur automatique d'appels. Ces ordres correspondent à des mots inscrits dans un registre de commande de l'ordinateur. L'ordre de déconnexion de l'émetteur automatique de la ligne, y compris la déconnexion du haut-parleur est représenté par le mot héxadécimal 9D, l'ordre de fermeture de boucle par le mot héxadécimal 8D et l'ordre de connexion du haut parleur par le mot héxadécimal 0D "xD" étant l'adresse physique du composeur de numéros pris en tant qu'appareil périphérique. Ce registre de commande d'émetteur automatique d'appels est, pendant les phases LP1 à LP5 le registre 431 de la Fig. 14.

On va maintenant décrire en relation avec les Figs. 1 à 10 les phases LP0

à LP10 de l'ordinateur.

Dans les Figs. 1 à 10, un rectangle oblong indique une phase de l'ordinateur, un parallélogramme, une entrée/sortie de l'ordinateur, un losange ou un hexagone, un aiguillage conditionnel de programme, un carré ou un rectangle une opération de l'ordinateur et un rectangle en forme de flèche un passage à la phase subséquente après temporisation.

PHASE d'INITIALISATION DE LIGNE  ILI

Le rôle de cette phase  est la mise à l'état déconnecté de la ligne téléphonique et du haut-parleur et la mise à l'état disponible de l'émetteur automatique d'appels.

Cette phase comprend une opération de commande de déconnexion (101) de l'émetteur automatique d'appels, y compris le haut-parleur, de la ligne représentée par l'envoi par l'ordinateur à l'émetteur automatique d'appels, du mot héxadécimal 9D, une opération d'inscription (102) de "00" dans le registre 436 de marquage de la phase en cours et un passage (103) à la phase

d'attente LP0 au bout d'un temps  $T_1$  = 250 ms.

PHASE D'ATTENTE  LP0  (Fig. 2)

Cette phase consiste à tester le statut, c'est-à-dire l'état de liberté de la ligne téléphonique: la ligne n'est pas ou est en état de sonnerie et le combiné est ou n'est pas décroché; on reçoit ou on ne reçoit pas une tonalité.

Le phase LP0 est une phase d'attente dans laquelle peut se produire soit

un évènement extérieur, c'est-à-dire une demande de numérotation par l'usager, soit un évènement intérieur, c'est-à-dire le renouvellement après temporisation d'une demande de numérotation non satisfaite, soit aucun évènement, c'est-à-dire pas de demande de numérotation du tout.

Dans ce dernier cas, le programme d'attente après avoir acquis le mot de statut (201) se boucle sur lui-même au bout de $T_1$ = 250 ms (202).

En cas de nouvel appel en instance ou d'un appel renouvelé ayant épuisé sa temporisation, le programme d'attente LP0 se branche sur le programme de lecture des numéros LP1 (203). Dans le cas d'un appel renouvelé n'ayant pas épuisé se tamporisation, le programme d'attente LP0 se boucle sur lui-même mais après un délai de $T_2 = 1$ s. (204).

Plus précisément le programme d'attente LP0 lit (201) le registre de statut 432. Si la ligne est libre (201 Oui), on revient au début du programme d'attente au bout d'un temps $T_1 = 250$ ms. Si la ligne est en appel ou que le combiné est décroché (201 Non), on teste (205) le contenu d'un registre CLW 430 qui garde en mémoire les demandes d'appels antérieures. Si l'octet contenu dans CLW n'est pas compris entre "80" et "FF" (entre 128 et 255 en décimal, c'est qu'il n'y a pas d'appel en instance. On revient (202) au début du programme d'attente LP0 au bout d'un temps $T_1 = 250$ ms.

Si l'octet contenu dans CLW est compris entre "80" et "FF", on incrémente d'une unité (207) CLW et l'on teste si oui ou non le contenu de CLW est égal à "00". Si ce contenu n'est pas égal à zéro, on revient (202) au début du programme d'attente LP0 au bout d'un temps $T_2 = 1$ s.

Si le contenu de CLW est "00", l'appel peut avoir lieu immédiatement et l'on passe (203) à la phase de lecture des numéros LP1.

PHASE DE LECTURE DES NUMEROS LPI (Fig. 2)

Dans cette phase, l'ordinatuer lit (208) le registre CLW 430 de sélection des anciens et nouveaux appels. Si l'appel en cours est un appel nouveau (208 Oui), le numéro d'appel est transféré (209) du répertoire téléphonique 47 dans un registre DC1 et l'on passe à la phase de bouclage de ligne LP2 (210). Si l'appel est un appel à renouveler, le numéro à composer est déjà dans le registre DC1; aucune action n'est entreprise et l'on passe à la phase de bouclage de ligne LP2 (210).

PHASE DE BOUCLAGE DE LIGNE LP2 (Fig.2)

Cette phase comporte l'envoi d'un ordre (211) de l'ordinateur à l'émetteur automatique d'appels. Ainsi qu'on l'a vu, cet ordre est constitué par le mot héxadécimal 8D. L'ordinateur met en service (212) le registre de surveillance 434 octroyant un délai de $\tau_1$ = 20", pour l'obtention de la tonalité d'invitation à numéroter. Et l'on passe à la phase d'analyse de la tonalité d'invitation à numéroter LP3 (213).

PHASE D'ANALYSE DE LA TONALITE D'INVITATION A NUMEROTER LP3 (Fig.3)

Ainsi qu'on l'a dit dans l'entrée en matière, la durée du signal d'invitation à numéroter doit être au moins égale à une limite, par exemple à 800 ms sans interruption pour que le signal soit considéré comme significatif. Cette valeur de durée est introduite (301) dans le registre 435 de compte de durée de tonalité.

Le programme recherche (302) si $\tau_1$ introduit en 212 (Fig.2) est écoulé ou non. S'il n'est pas écoulé (302 Non) le programme acquiert (303) le mot de statut et recherche (304) si l'on est en période de réception de signal ou en période de silence. Si l'on est en période de réception de signal, le programme décrémente (305) la durée de signal inscrite dans le registre 435, et revient (306) au début de LP3 au bout d'un temps $T_3$ = 20 ms. Le registre 435 étant décompté d'une unité toutes les 20 ms, il faut 40 cycles de la phase LP3 pour épuiser cette durée. Quand la décrémentation est terminée, on passe (307) à la phase de numérotation LP4.

Si à un moment quelconque des 800 ms, on a reconnu un silence, on repositionne le registre 435 sur la durée de tonalité attendue et l'on reprend la décrementation à zéro.

Si le délai $\tau_1$ est écoulé (302 Oui), on lit (310) un registre de compte d'essais d'appel qui est le registre 430 qui contenait CLW au cours de la phase LP0 de la Fig. 2 et on repositionne ce registre. Le positionnement est différent selon que plusieurs essais d'un même numéro sont permis ou non. Si plusieurs essais ne sont pas permis, on met (308) "0B" dans CLW. Si plusieurs essais sont permis, on met (309) $T_4$ = 2' (selon les normes PTT en matière de renouvellement automatique des appels) dans CLW. Le positionnement de CLW est tel que l'incrémentation modulo "FF" faite en 207 (Fig.2) toutes les secondes permette d'atteindre l'intervalle de temps qui doit s'écouler entre deux appels successifs du même numéro aux termes de la réglementation téléphonique. Et l'on revient à la phase LP1 (Fig. 1).

0011035

PHASE D'ANALYSE DU NUMERO LP4 (Fig.4)

Dans cette phase, un registe de rang d'octets 436 distingue (401) l'octet relatif au premier chiffre du numéro de téléphone des octets relatifs aux chiffres subséquents. Quand le premier octet est "A0", le numéro est un numéro normal dont tous les chiffres et seulement les chiffres sont à composer. On suit alors (402) la phase LP41 du programme LP4. Quand le premier octet est "AE", le numéro comporte un préfixe. On suit alors (403) la phase LPAFX du programme LP4 qui insère automatiquement le préfixe. Quand le premier octet est "90", l'appel concerne une transmission de données via le réseau de téléinformatique "TRANSPAC" dont le numéro téléphonique d'accès est connu d'une façon implicite par le composeur ( numéro privilégié du répertoire permanent) et l'on suit alors (404) la phase LPATC du programme LP4.

Les octets relatifs aux chiffres du numéro autres que le premier chiffre suivent (405) le programme LP41. On a indiqué sur la Fig. 4, en fonction de la composition de l'octet de chaque chiffre, d'une part la signification de l'octet et d'autre part la phase à laquelle est branchée la fin de la phase LP 41.

Il faut remarquer que chaque numéro se termine par un octet de fin. Cet octet de fin est l'octet "8D" dans le cas d'un numéro à usage téléphonique; c'est l'octet "90" ou "A1 ... A6" dans le cas d'un numéro à usage de transmission de données, un séparateur dans ce cas permettant la sélection de la de la procédure ad hoc.

La phase LP4TC comprend l'opération (406) de transférer dans un registre de chiffres (registre 437) les octets formant le numéro d'appel du réseau "Transpac". Elle se branche ensuite sur la phase LP4FX qui comprend l'opération (407) d'acquérir le préfixe. Si le préfixe ne commence par un chiffre (B0 – B9) il est ignoré et l'on retourne immédiatement au numéro principal. La rencontre, en cours d'émission du numéro, d'un octet "AE", pilotera une opération dite "PAUSE" où l'on retourne à la phase LP2 (Fig.2) afin d'attendre l'obtention d'une nouvelle tonalité continue d'invitation à numéroter avant de poursuivre l'opération de numérotation.

La phase LP4 se branche sur différentes phases selon les valeurs des octets autres que le premier; la phase LP41 étant branchée sur la phase de numérotation LP5.

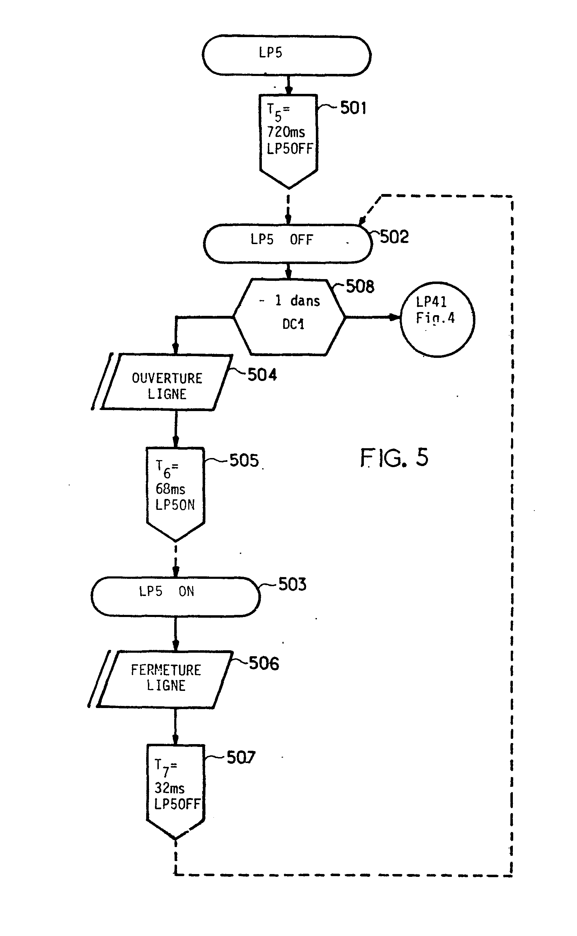

PHASE DE NUMEROTATION LP5 (Fig.5).

La phase de numérotation comprend, après un retard $T_5$ = 720 ms représentant l'intervalle de temps entre chiffres (501) la commande de la phase LP50FF (502) suivie de la commande de la phase LP50N (503). Au cours de la phase LP50FF la ligne est ouverte par envoi (504) de l'octet " 9D" à l'émetteur automatique d'appels, cette opération ayant une durée nominale de $T_6$ = 68 ms (505). Au cours de la phase LP50N, la ligne est fermée par envoi (506) de l'octet "8D" à l'émetteur automatique d'appels, cette opération ayant une durée nominale de $T_7$ = 32 ms (507). Les durées $T_6$ et $T_7$ sont affinées par microtemporisation respectivement à 67 et 33 ms. La numérotation continue jusqu'à décrémentation complète de DCI (508).

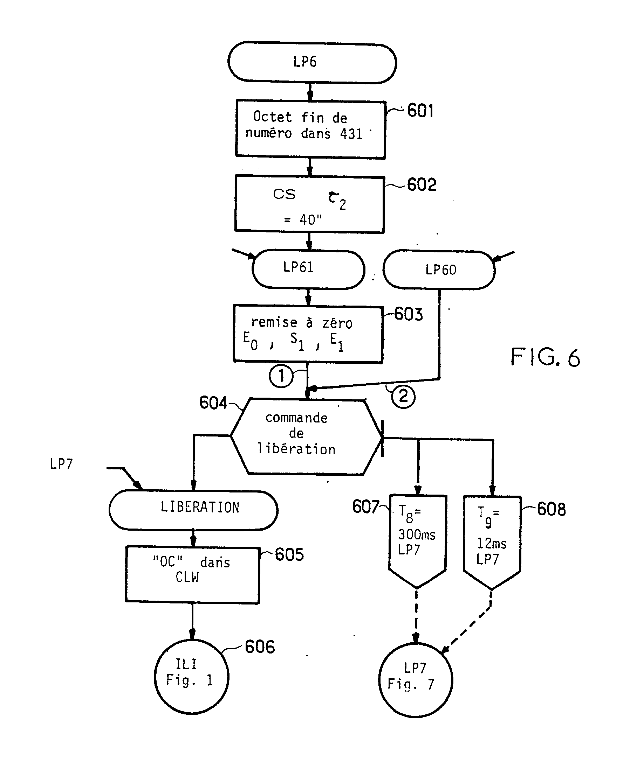

PHASE D'ANALYSE DES TONALITES D'APRES NUMEROTATION, PREMIERE PARTIE, LP6 (Fig.6)

Après la fin de la numérotation (rencontre des séparateurs décrits ci-dessus), le signal de tonalité reçu du central par l'émetteur automatique d'appels peut être dans le cas d'une communication téléphonique soit un silence, soit une tonalité d'acheminement, d'occupation ou de retour d'appel et, dans le cas d'une communication de transmission de données un silence ou une tonalité émise par le central de transmission de données.

Ces signaux peuvent être répartis en trois groupes :

- 1er groupe : tonalités continues permanentes ;

- 2ème groupe : silences permanents ;

- 3ème groupe : tonalités interrompues par des silences.

Ainsi qu'on l'a dit dans l'entrée en matière, le principe de la reconnaissance d'une tonalité est le suivant :

Dans le cas d'une tonalité continue, on détecte le début de la tonalité continue et on en mesure la durée. Au delà d'un certain seuil de durée, l'ordinateur prend une décision de reconnaissance.

Dans le cas d'une tonalité interrompue, on mesure les durées de deux impulsions de tonalité et du silence qui les sépare. Si le point représentatif de la tonalité interrompue, point ayant pour abscisse la durée d'une impulsion de tonalité et pour ordonnée la durée du silence adjacent est dans un domaine prédéterminé, l'ordinateur prend une décision de reconnaissance.

A la fin de la phase d'analyse du numéro LP4, un octet a été inscrit (601) dans le registre 431 de fin de numéro et selon sa valeur l'octet indique s'il s'agit d'un numéro téléphonique ou d'un numéro à usage de transmission de données. Au début de la présente phase, le circuit de surveillance CS précédemment placé sur $\tau_1$ = 20" (Fig.2) dans l'attente de la tonalité d'invitation à numéroter d'avant numérotation est placé (602) sur $\tau_2$ = 40" dans l'attente de la tonalité continue ou discontinue d'après numérotation. On passe alors au début du programme LP 61 qui est un point d'itération des mesures de durée des impulsions de tonalité et de silence. On remet à zéro (603) les compteurs de durée de $E_0$, $S_1$, $E_1$ qui ne sont autres que les registres 435, 436, 437 utilisés à d'autres fonctions dans les phases précédentes. Le programme vérifie alors (604) que l'émetteur automatique d'appels n'a pas reçu d'un programme extérieur un ordre demandant une libération, ce qui se traduit par un octet particulier "OF", dans le registre CLW. S'il y a demande de libération soit par programme externe, soit en provenance du programme LP7, on inscrit "OC" dans CLW (605) et l'on revient au programme d'initialisation ILI (606). S'il n'y a pas de demande de libération, on passe soit avec un délai de $T_8$ = 300 ms (607), soit avec un délai de $T_9$ = 12 ms (608) à la phase LP7, le délai variant selon que l'entrée dans la phase LP6 s'est faite par LP60 ou LP61.

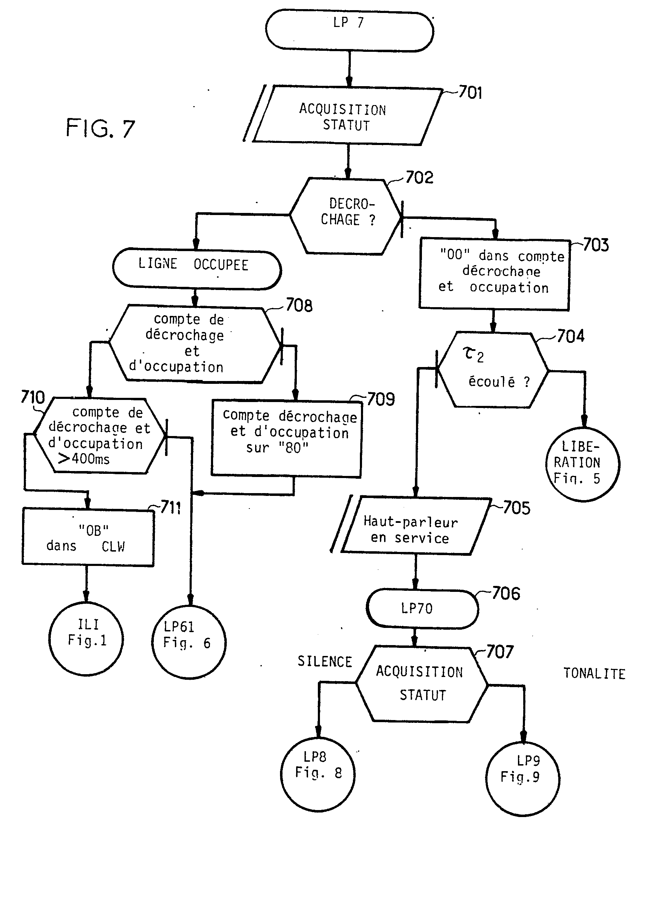

PHASE D'ANALYSE DES TONALITES D'APRES NUMEROTATION; DEUXIEME PARTIE LP7 (Fig.7).

La phase commence par l'acquisition (701) du mot de statut dans le registre 432.

Le signal d'occupation sur la ligne dont on rappelle qu'il est dans le bit 6 de l'octet de statut peut être dû soit au décrochage du combiné du poste d'opérateur soit à une impulsion de connexion provenant de la dérivation, par le condensateur du poste, de l'inversion de polarité sur la ligne dû au décrochage du demandé. Cette impulsion a une durée d'au plus 40 ms et l'expérience montre qu'elle peut être dédoublée. On échantillonne le signal d'occupation sur la borne 32 de l'émetteur automatique d'appels avec des impulsions d'échantillonnage à la période de répétition de 12 ms (608 ; Fig.6). L'échantillonnage s'arrête pendant 300 ms (607 ; Fig. 6) la première fois que l'on a échantillonné positivement un signal d'occupation.

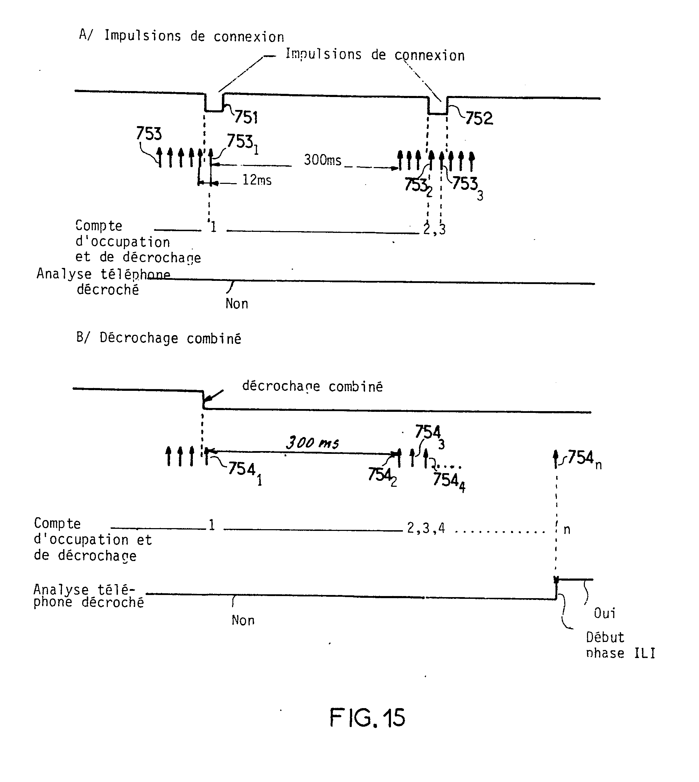

En se référant à la Fig. 15, des impulsions de connexion sont représentées en 751 et 752 et elles sont échantillonnées par les impulsions d'échantillonnage 753. Après l'impulsion $753_1$, première impulsion à échantillonner positivement l'impulsion 751, l'échantillonnage s'arrête pendant 300 ms puis reprend. Les impulsions $753_2$ et $753_3$ échantillonnent effectivement l'impulsion 752. On compte les impulsions d'échantillonnage effectives, ici trois. Dans le cas du décrochage du combiné, il y a toujours une seule impulsion $754_1$ comme il y avait une seule impulsion $753_1$, mais il y a un grand nombre d'impulsions d'échantillonnage effectif $754_2$, $754_3$, ....$754_n$ au deuxième échantillonnage. Il est possible de déterminer une durée dénommée compte d'occupation et de décrochage égale à

$$T_8 + n\,T_9 = (300 + 12n)\ \text{ms}$$

en prenant une valeur de n intermédiaire entre n dans le cas de l'impulsion de connexion et n dans le cas du décrochage. On a choisi $T_{10} = 400$ ms.

Le programme recherche si l'émetteur automatique d'appels est occupé, c'est-à-dire s'il y a un signal sur la borne 32 (702). S'il n'est pas occupé, on inscrit "00" (703) dans le compte d'occupation et de décrochage situé dans le registre 432. On recherche ensuite (704) si le délai $\tau_2 = 40''$ est écoulé. S'il est écoulé, on libère l'émetteur automatique d'appels en passant à la phase de libération (610) de la Fig. 6. Si le délai $\tau_2$ n'est pas écoulé, on met le haut-parleur en service (705). Puis on passe à la phase LP70 (706). On acquiert le mot de statut (707) et l'on recherche si l'on est en période de signal auquel cas on passe à la phase LP 73 ou en période de silence auquel cas on passe à la phase LP 71.

Si la ligne est occupée (combiné décroché), on recherche (708) si le compte d'occupation et de décrochage est inscrit ou non. S'il n'est pas inscrit, on lui donne la valeur héxadécimale "80" (709) et l'on revient à la phase LP 61. Si le compte d'occupation et de décrochage est inscrit, on recherche s'il est supérieur ou inférieur à $T_{10}$ (710). S'il est inférieur, on passe en LP 61. S'il est supérieur, on inscrit "0B" dans CLW (711) et on revient à la phase d'initialisation ILI.

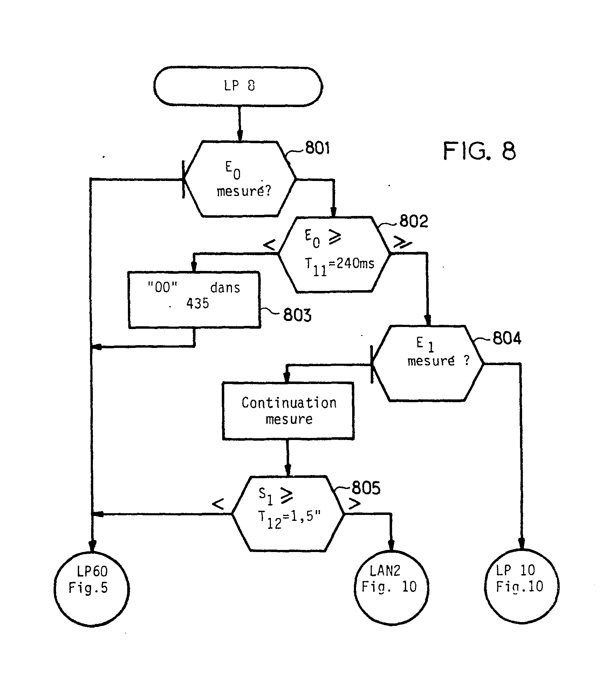

PHASE DE MESURE DES PERIODES DE SILENCE LP8 (Fig. 8).

Le principe de la mesure de la période de silence $S_1$ est le suivant.

On ignore la période de silence $S_0$ suivant immédiatement la numérotation. On vérifie que $E_0$ a été mesuré et est significatif et que $E_1$ a été mesuré. Dans l'affirmative, on est dans la période de silence qui suit $E_1$ c'est-à-dire dans $S_2$. On mesure $S_1$ pour distinguer entre une réponse à un appel téléphonique et une réponse à un appel relatif à une transmission de données.

Le programme recherche (801) si la durée de $E_0$ (Fig.12) est inscrite dans le registre 435. Si $E_0$ n'est pas positionné dans 435 c'est qu'on se trouve dans $S_0$ première période de silence suivant la fin de numérotation. Cette phase $S_0$ est ignorée et on retourne à LP 60. Si $E_0$ est positionné dans 435, on recherche (802) si $E_0$ est inférieur, ou supérieur ou égal à une valeur significative $T_{11}$ = 240 ms. S'il est inférieur à cette valeur, on revient à LP 60 après avoir inscrit "00" dans le registre 435 (803). S'il est supérieur à cette valeur, c'est qu'on est soit dans $S_1$ soit dans $S_2$. Pour le savoir, on regarde (804) si $E_1$ est inscrit dans le registre 436. Si $E_1$ est positionné, c'est qu'on se trouve dans $S_2$. On va donc pouvoir analyser $E_0$, $S_1$, $E_1$ et l'on passe à LP 10. Si $E_1$ n'est pas positionné dans le registre 436, on mesure (805) la durée de $S_1$. Si $S_1$ est supérieur à 1,5", on passe au programme LAN 2; s'il est inférieur, on revient en LP 60 (Fig. 6).

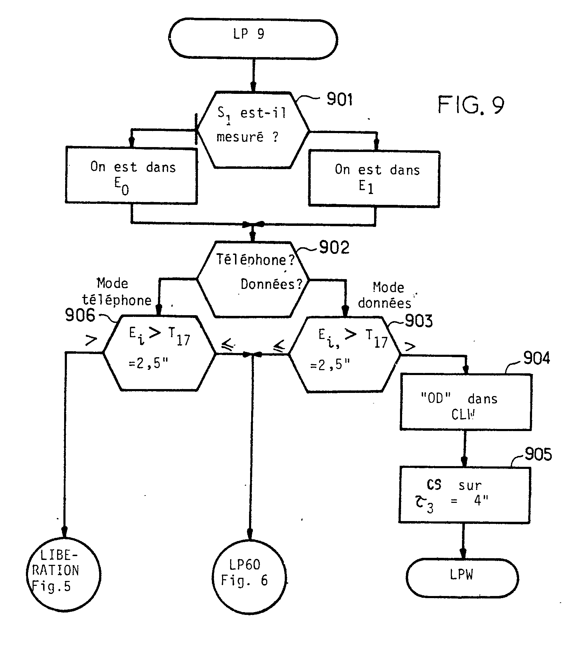

## PHASE DE MESURE DES PERIODES DE RECEPTION DE SIGNAL L.P. 9 (Fig. 9 ).

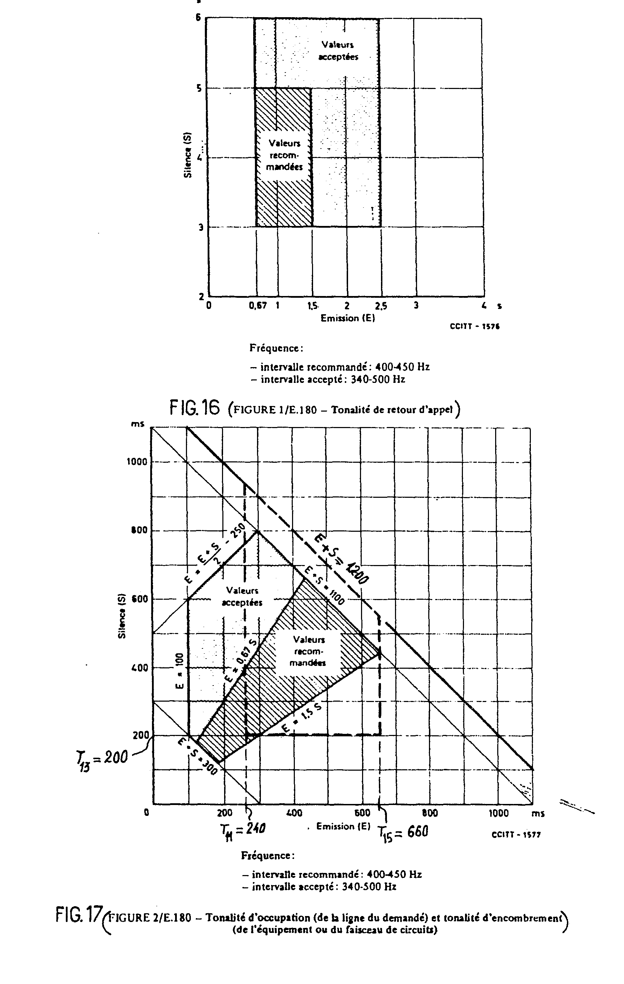

Le programme vérifie (901) que $S_1$ a bien été mesuré, c'est-à-dire que le contenu du registre compteur 436 est différent de zéro. Si oui on est dans $E_1$; sinon on est dans $E_0$. Le registre 431 "Téléphone-Données" dont on a vu qu'en (601) il recevait un mot signifiant que l'appel est un appel téléphonique ou un mot signifiant que l'appel est un appel de transmission de données est lu (902). On compare la valeur actuelle de $E_0$ ou $E_1$ dénommée $E_i$ (i = 0 ou 1) à la durée la plus longue que peut prendre l'émission d'une tonalité de retour d'appel recommandée ou acceptée. On voit sur la Fig. 16 que cette durée la plus longue est $T_{17}$ = 2,5 s. Si $E_i$ est supérieur à 2,5 s. dans le cas d'une transmission de données (903), la tonalité reçue est une tonalité de modem. On inscrit "0D" dans CLW (904) et l'on place le circuit de surveillance CS sur $\tau_3$ = 4" (905); puis on passe à la phase LPW de connexion du modem qui se termine par ILI. La phase PLW n'est pas décrite en détail; elle consiste à donner 4" au modem pour se connecter après quoi l'émetteur automatique d'appels se déconnecte de la ligne.

Si $E_i$ est supérieur à 2,5" dans le cas d'une communication téléphonique (906), on passe à la phase LIBERATION de la Fig. 6 qui se termine par la déconnexion de l'émetteur automatique d'appels.

Si $E_i$ est inférieur à 2,5" dans le cas d'une communication téléphonique et inférieur à 2,5" dans le cas d'une communication de données, on passe à la phase LP 60 de la Fig. 6, c'est-à-dire au début de l'analyse des tonalités d'après numérotation.

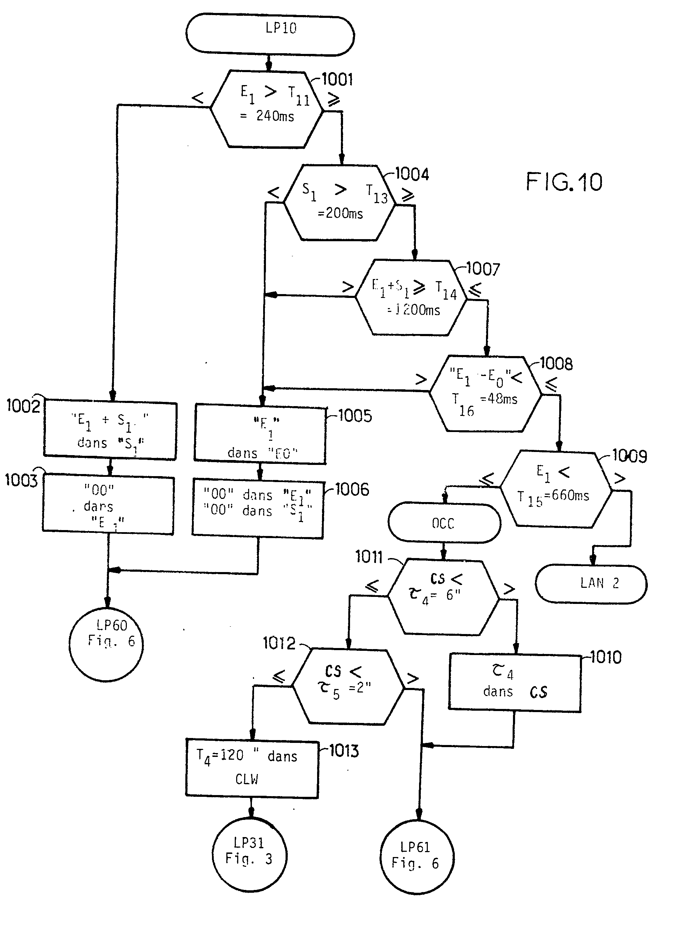

ANALYSE DES MESURES, LP 10 (Fig. 10).

On a maintenant les mesures des durées $E_0$, $S_1$, $E_1$.

On a déjà vérifié que (904), dans le cas d'un appel téléphonique, $E_1$ était inférieur à 2",5 (ce qui élimine la tonalité de connexion d'un modem). On a également vérifié (802) que $E_0$ était significatif c'est-à-dire plus grand que 240 ms.

$$E_0 \geqslant T_{11} = 240 \text{ ms} \qquad (1)$$

On va maintenant vérifié que

$$E_1 \geqslant T_{11} = 240 \text{ ms} \qquad (2)$$

$$S_1 \geqslant T_{13} = 200 \text{ ms} \qquad (3)$$

$$E_1 + S_1 \leqslant T_{14} = 1200 \text{ ms} \qquad (4)$$

$$E_1 \leqslant T_{15} = 660 \text{ ms} \qquad (5)$$

On voit en se référant à la Fig. 17 que le point figuratif de la cadence de la tonalité sera dans l'aire limitée en pointillé sur cette figure. Ainsi qu'on l'a indiqué dans l'entrée en matière, les valeurs des "T" sont seulement illustratives et l'on pourrait conformément à l'invention prendre exactement comme domaine du point figuratif de la cadence de la tonalité le domaine recommandé du C.C.I.T.T.

De façon plus précise le programme vérifie que $E_1$ est significatif (1001), c'est-à-dire supérieur à 240 ms. Si $E_1$ n'est pas significatif, on admet que $E_1$ est un bruit dans le silence $S_1$, c'est-à-dire fait partie de $S_1$. On place "$E_1 + S_1$" dans $S_1$ (1002), c'est-à-dire que l'on substitue à $S_1$ dans le registre 436 la quantité "$E_1 + S_1$" et on inscrit "00" dans $E_1$ c'est-à-dire dans le registre 437 (1003). On revient ensuite à la phase LP 60 de la Fig. 6.

Si $E_1$ est supérieur à 240 ms, on vérifie si $S_1$ est supérieur à 200 ms (1004) (on a déjà vérifié si $S_1$ était inférieur à 1,5" en (805). Si $S_1$ est inférieur à 200 ms, on ne tient pas compte de $S_1$ et on admet qu'on est dans

$E_0$ et non dans $E_1$. On ajoute $E_1$ à $E_0$ dans le registre 437 (1005) ce qui est la nouvelle valeur de $E_0$ et on met "$\infty$" dans le registre 436 de $S_1$ (1006). On passe ensuite à la phase LP 60 de la Fig. 6.

$E_0$, $S_1$, $E_1$ étant tous trois significatifs, c'est-à-dire les inégalités (1), (2) et (3) étant satisfaites, on vérifie (1007) l'inégalité (4). Si elle n'est pas vérifiée, on revient à la phase LP 60. Si elle est vérifiée, on vérifie (1008) que la tonalité reçue est bien cyclique, c'est-à-dire que $\left| E_1 - E_0 \right|$ est nul à une tolérance près, disons $T_{16} = 48$ ms. Si $E_1$ n'est pas égal à $E_0$ à la tolérance près, on revient à la pahse LP 60. Si $\left| E_1 - E_0 \right| < 48$ ms, on vérifie que $E_1 \leqslant 660$ ms (cf. Fig. 17).

Si $E_1$ est supérieur à 660 ms, la tonalité n'est pas une tonalité d'occupation. On passe à la phase LAN 2 déjà rencontrée dans la Fig.8, non décrite en détail et qui aboutit à une libération.

Si $E_1$ est inférieur à 660 ms, on passe à la phase OCC qui consiste à laisser se reproduire les impulsions $E_0$, $S_1$, $E_1$ de la tonalité pendant un temps appréciable. Cette répétition est faite pour des raisons psychologiques afin que l'opérateur entende les tonalités par le haut-parleur pendant des temps excédant quelques centaines de millisecondes. Dans la phase OCC, on mesure $E_0$; $S_1$, $E_1$ ; $S_2$ $E_2$, pendant un nombre de cycles $E + S$ entier. Au début de la phase OCC, on positionne (1010) le circuit de surveillance CS 434 sur $\tau_4 = 6''$ et l'on compare (1011 et 1012) l'intervalle de temps qui s'est écoulé depuis le début de la phase OCC à 6'' et 2''.

Entre les instants suivant de 2'' à 6'' le début de la phase OCC, cette phase se branche sur le début de la phase LP 61 de la Fig. 6 qui marque le début du cycle d'analyse des tonalités d'après numérotation, suivie de la phase LP 7 au cours de laquelle le haut-parleur est mis en service. Pendant 4 secondes, la tonalité d'occupation est ainsi entendue par l'opérateur. Entre l'instant de début de la phase OCC et l'instant suivant de 2'' ce début, la durée $T_4 = 120''$ est inscrite (1013) dans CLW et la phase OCC se branche sur la phase LP 31 de la Fig. 3.

Bien que dans l'exemple décrit on ait seulement vérifié des inégalités du type $E + S \leqslant A$ (4) (A, constante) c'est-à-dire recherché la position du point représentatif de la cadence d'interruption par rapport à une droite parallèle à la seconde bissectrice, il est facile de vérifier des inégalités du type $E + kS \leqslant 0$ (6) (k, constante) c'est-à-dire de rechercher la position du point représentatif de la cadence d'interruption par rapport à une droite passant par l'origine ou de vérifier des inégalités du type

$$E + kS \leqslant A \quad (7) \quad (A, \text{constante})$$

c'est-à-dire que la position du point représentatif est d'un côté ou de l'autre d'une droite quelconque du plan

$$x = E, \ y = S$$

La Fig. 17 présente deux exemple du type (6), à savoir les droites

$$E = 1,5 \, S$$

$$E = 0,67 \, S$$

et un exemple du type (7) avec $k = 1$, à savoir la droite

$$E = \frac{E + S}{2} - 250$$

0011035

1

<u>Revendications de brevet.</u>

1 - Composeur de numéros téléphoniques comprenant essentiellement :

des moyens d'établir et de rompre la boucle d'une ligne téléphonique, des moyens de fournir sur une première borne de sortie un premier signal continu quand le poste téléphonique associé au composeur de numéros téléphoniques reçoit un courant de sonnerie, sur une seconde borne de sortie un second signal continu quand le poste téléphonique est décroché, sur une troisième borne de sortie un troisième signal continu quand le poste téléphonique reçoit une tonalité quelconque, et sur une borne d'entrée un signal de commande desdits moyens d'établir et de rompre ladite boucle ;

un micro-ordinateur recevant par l'intermédiaire d'une interface lesdits signaux continus de sortie et fournissant à la borne d'entrée ledit signal de commande ;

des moyens de convertir en un niveau logique les tonalités pendant leur période d'émission et dans le niveau opposé les périodes de silence,

et il est caractérisé en ce qu'il comprend en outre :

des moyens de mesurer la durée de deux impulsions de tonalité consécutives $E_0$ et $E_1$ déduites des tonalités interrompues reçues par le composeur de numéros téléphoniques et la durée de l'impulsion de silence $S_1$ qui les sépare ;

des moyens de mesurer en temps réel si la durée des impulsions de tonalité $E_0$ et $E_1$ est plus grande ou plus petite qu'une première valeur donnée et si la durée de l'impulsion de silence $S_1$ est plus grande ou plus petite qu'une seconde valeur donnée ;

des moyens d'ajouter la durée de $E_1$ à celle de $S_1$ et de reprendre la mesure de la durée de $E_1$ à zéro si la durée de $E_1$ est inférieure à la première valeur donnée ;

des moyens de substituer la durée de $E_1$ à celle de $E_0$ et de reprendre la mesure de la durée de $S_1$ et de $E_1$ à zéro

si la durée de $S_1$ est inférieure à la seconde valeur donnée ;

et des moyens de reconnaître la tonalité dont dérivent les impulsions de tonalité et de silence quand simultanément la durée desdites impulsions de tonalité $E_0$ et $E_1$ et la durée de ladite impulsion de silence $S_1$ sont respectivement plus grandes que la première valeur donnée et la seconde valeur donnée.

2 - Composeur de numéros téléphoniques conforme à la revendication 1,

caractérisé en ce qu'il comprend en outre :

des moyens de mesurer si la somme de la durée d'une impulsion de tonalité et de la durée de l'impulsion de silence qui la suit ou la précède est plus grande ou plus petite qu'une troisième valeur donnée; et

des moyens de reconnaître la tonalité dont dérivent les impulsions de tonalité et de silence quand simultanément la durée desdites impulsions de tonalité $E_0$ et $E_1$ et la durée de ladite impulsion de silence $S_1$ sont respectivement plus grandes que la première valeur donnée et la seconde valeur donnée et que la somme de la durée d'une impulsion de tonalité et de la durée de l'impulsion de silence qui la suit ou la précède est plus grande que la troisième valeur donnée.

3 - Composeur de numéros téléphoniques conforme à la revendication 1,

caractérisé en ce qu'il comprend en outre :

des moyens de mesurer si la somme d'une fraction de la durée d'une impulsion de tonalité et d'une fraction de la durée de l'impulsion de silence qui la suit ou la précède est plus grande ou plus petite qu'une quatrième valeur donnée; et

des moyens de reconnaître la tonalité dont dérivent les impulsions de tonalité et de silence quand simultanément la durée desdites impulsions de tonalité $E_0$ et $E_1$ et la durée de ladite impulsion de silence $S_1$ sont respectivement plus grandes que la première valeur donnée et la seconde valeur donnée et que la somme de ladite fraction de la durée d'une impulsion

3

de tonalité et de ladite fraction de la durée de l'impulsion de silence qui la suit ou la précède est plus grande que la quatrième valeur donnée.

4 - Composeur de numéros téléphoniques conforme à la revendication 1,

caractérisé en ce qu'il comprend en outre :

un premier registre dans le micro-ordinateur dans lequel est mis en mémoire soit un premier mot significatif du fait que le signal de commande des moyens d'établissement et de rupture de boucle est relatif à un nuùéro téléphonique d'abonné, soit un second mot significatif du fait que ledit signal de commande est relatif à un numéro téléphonique d'un poste public d'un réseau de transmission de données ;

des moyens de mesurer si la durée des impulsions de tonalité est plus grande ou plus petite qu'une durée de référence; et des moyens de reconnaître que la tonalité interrompue dont dérivent les impulsions de tonalité et de silence est relative à l'appel d'un numéro téléphonique d'abonné quand simultanément ledit premier registre contient le premier mot significatif et que la durée des impulsions de tonalité est plus petite que la durée de référence et que ladite tonalité interrompue est relative à l'appel d'un numéro téléphonique d'un poste public d'un réseau de transmission de données quand simultanément ledit premier registre contient le second mot significatif et que la durée des impulsions de tonalité est plus grande que la durée de référence.

5 - Composeur de numéros téléphoniques conforme à la revendication 4,

caractérisé en ce que la durée de référence peut prendre une cinquième valeur donnée et une sixième valeur donnée plus petite que la cinquième valeur donnée et que la tonalité interrompue est reconnue comme une tonalité de retour d'appel relative à l'appel d'un numéro téléphonique d'abonné quand simultanément le premier registre contient le premier mot significatif et que la durée des impulsions de tonalité est plus petite que la cinquième valeur donnée, que la tonalité interrompue est reconnue comme une tonalité d'occupation relative à l'appel d'un numéro téléphonique d'abonné quand simultanément le premier registre contient le premier mot significatif et que la durée des impulsions de tonalité est plus petite que la sixième valeur donnée, que la tonalité interrompue est reconnue comme une tonalité de retour d'appel relative à l'appel du numéro téléphonique d'un poste public d'un réseau de transmission de données quand simultanément le premier registre contient le second mot significatif et que la durée des impulsions de tonalité est plus petite que la cinquième valeur donnée et que la tonalité interrompue est reconnue comme une tonalité d'occupation relative à l'appel du numéro téléphonique d'un poste public d'un réseau de transmission de données quand simultanément le premier registre contient le second mot significatif et que la durée des impulsions de tonalité est plus petite que la sixième valeur donnée.

6 - Composeur de numéros téléphoniques conforme à la revendication 5,

caractérisé en ce qu'il comprend en outre :

un second registre dans le micro-ordinateur dans lequel est mis en mémoire un mot significatif d'un délai prédéterminé en fin duquel il faut renouveler l'appel quand la tonalité interrompue est reconnue comme une tonalité d'occupation relative à l'appel d'un numéro téléphonique d'abonné ; et

des moyens de décrémenter ledit second registre compris dans les moyens de fournir à la borne d'entrée ledit signal de commande des moyens d'établir et de rompre la boucle de la ligne téléphonique, de telle façon que la boucle ne puisse être établie que quand ledit registre à été décrémenté jusqu'à zéro, c'est-à-dire au bout dudit délai prédéterminé.

7 - Composeur de numéros téléphoniques conforme à la revendication 1,

5

caractérisé en ce qu'il comprend en outre :

des moyens de mesurer la durée d'une impulsion continue de tonalité déduite d'une tonalité ininterrompue reçue par le composeur de numéros téléphoniques ;

des moyens de mesurer en temps réel si la durée de cette impulsion continue est plus grande ou plus petite qu'une septième valeur donnée ; et

des moyens de recommencer la mesure de la durée de l'impulsion continue si pendant la durée ayant ladite septième valeur donnée une impulsion de silence est reçue.

8 - Composeur de numéros téléphoniques conforme à la revendication 1,

caractérisé en ce qu'il comprend en outre un circuit de surveillance et de contrôle d'attente contrôlant les moyens de mesurer la durée de deux impulsions de tonalité consécutives $E_0$ et $E_1$ déduites des tonalités interrompues reçues par le composeur de numéros téléphoniques et la durée de l'impulsion de silence $S_1$ qui les sépare de façon que lesdits moyens de mesure ne mesurent effectivement lesdites durées que pendant un délai prédéterminé d'attente de la tonalité interrompue.

9 - Composeur de numéros téléphoniques conforme à la revendication 7,

caractérisé en ce qu'il comprend en outre un circuit de surveillance et de contrôle d'attente contrôlant les moyens de mesurer la durée de l'impulsion continue déduite d'une tonalité ininterrompue reçue par le composeur de numéros téléphoniques de façon que lesdits moyens de mesure ne mesurent effectivement ladite durée que pendant un délai prédéterminé d'attente de la tonalité ininterrompue.

FIG.1

0011035

Commande externe de
Numérotation → **PHASE D'ATTENTE, LPO**

201 — **ACQUISITION STATUT**

205 — **CLW** — "80" ≤ CLW ≤ "FF"

207 — **CLW +1 dans CLW**

= "00"    ≠ "00"

202 — $T_1 =$ 250ms LPO

203 — **LP1**

204 — $T_2 = 1"$ LPO

208 — **Nouvel appel ; Renouvellement d'appel (CLW)**

209 — *de 47 dans DC1*

210 — **LP2**

211 — **Bouclage ligne**

212 — $\tau_1 = 20"$ dans 434 *(CS)*

213 — **LP32 Fig.3**

FIG. 2

0011035

```
                    ┌──────────────┐
                    │     LP3      │
                    └──────┬───────┘
                           │
                    ┌──────┴──────┐  302
                    │    τ1       │
                    │  écoulé ?   │
                    └──┬───────┬──┘
                       │       │
                       │    ┌──┴───────┐
                       │    │   LP31   │
                       │    └────┬─────┘
                       │         │          310
                       │    ┌────┴──────────┐
                       │    │  Plusieurs    │
                       │    │ essais d'appel│
                       │    │   permis ?    │
                       │    └──┬────────┬───┘
  303                  │       │        │
┌──────────┐      ┌────┴────┐ ┌┴──────┐ 308 ┌──────────┐
│Acquisition│     │ T4= 120"│ │ 309   │     │  "OB"    │
│  statut  │      │ dans CLW│ │       │     │ dans CLW │
└────┬─────┘      └────┬────┘ └───────┘     └────┬─────┘
     │                 │                         │
┌────┴────┐       ┌────┴────┐  304               │
│  LP 32  │       │ ANALYSE │        RECEPTION    │
└────┬────┘       │ SIGNAL  │        TONALITE     │
 SILENCE          └──┬───┬──┘              ┌──────┴──┐
     │               │   │                 │  ILI    │
┌────┴─────┐ 301      │   │                 │  Fig.1  │
│ durée de │          │   │                 └─────────┘
│ tonalité │          │   │
│  800ms   │          │   │            FIG. 3
└────┬─────┘          │   │
     │                │   └──────┐
     │           ┌────┴──────┐ 305
     │           │    - 1    │
     │           │ dans 435  │
     │           └──┬─────┬──┘
     │              │     │
┌────┴───┐ 306      │     └────┐
│  T3=   │          │     ┌────┴────┐ 307
│ 20ms   │          │     │  LP4    │
│ LP3    │          │     │  Fig.4  │
└────────┘          │     └─────────┘
```

FIG. 3

FIG.4

| Valeur de l'octet | Signification | Phase subséquente |
|---|---|---|
| "8D" | Octet de fin de n° téléphonique | LP6, Fig.6 |
| "90" | Octet de fin de n° de transmission de données | LP6, Fig.6 |
| "AE" | Pause | LP2, Fig.2 |
| "B0" à "B9" | Chiffres | LP5, Fig.5 |

0011035

```
        ┌──────────────┐
        │     LP5      │
        └──────┬───────┘
               │
        ┌──────┴───────┐
        │ T₅=          │── 501
        │ 720ms        │
        │ LP5OFF       │
        └──────┬───────┘
               ╎                        ┌ ─ ─ ─ ─ ─ ─ ─ ┐
        ┌──────┴───────┐                ╎
        │  LP5  OFF    │── 502          ╎
        └──────┬───────┘                ╎
               │                        ╎
        ┌──────┴───────┐── 508          ╎
        │  - 1 dans    ├────►  ┌─────┐  ╎
        │    DC1       │       │LP41 │  ╎
        └──────┬───────┘       │Fig.4│  ╎
               │               └─────┘  ╎
        ┌──────┴───────┐── 504          ╎
        │  OUVERTURE   │                ╎
        │  LIGNE       │                ╎
        └──────┬───────┘       FIG. 5   ╎
               │                        ╎
        ┌──────┴───────┐── 505          ╎
        │ T₆=          │                ╎
        │ 68ms         │                ╎
        │ LP5ON        │                ╎
        └──────┬───────┘                ╎
               ╎                        ╎
        ┌──────┴───────┐── 503          ╎
        │  LP5  ON     │                ╎
        └──────┬───────┘                ╎
               │                        ╎
        ┌──────┴───────┐── 506          ╎
        │  FERMETURE   │                ╎
        │  LIGNE       │                ╎
        └──────┬───────┘                ╎
               │                        ╎
        ┌──────┴───────┐── 507          ╎
        │ T₇=          │                ╎
        │ 32ms         │                ╎
        │ LP5OFF       │                ╎
        └──────┬───────┘                ╎
               └ ─ ─ ─ ─ ─ ─ ─ ─ ─ ─ ─ ─┘
```

LP5

T₅ = 720ms LP5OFF — 501

LP5  OFF — 502

- 1 dans DC1 — 508

LP41 Fig.4

OUVERTURE LIGNE — 504

T₆ = 68ms LP5ON — 505

LP5  ON — 503

FERMETURE LIGNE — 506

T₇ = 32ms LP5OFF — 507

FIG. 5

FIG. 6

0011035

FIG. 7

```
                    ┌─────────────────┐
                    │      LP 7        │
                    └─────────────────┘
                             │
                             ▼
                   ╱─────────────────┐  ⟋701
                  ╱   ACQUISITION    │
                 ╱     STATUT        │
                └──────────────────╱
                             │
                             ▼
                      ╱────────────╲ ⟋702
                     ╱   DECRO-     ╲
                    │    CHAGE ?     ├───────────────┐
                     ╲              ╱                │
          ┌───────────╲────────────╱                │
          │                                         ▼
          ▼                              ┌─────────────────────┐ ⟋703
   ╭──────────────╮                      │ "00" dans compte    │
   │ LIGNE OCCUPEE │                     │ décrochage          │
   ╰──────────────╯                      │ et occupation       │
          │                              └─────────────────────┘
          ▼                                         │
    ╱──────────────╲ ⟋708                           ▼
   ╱   compte de    ╲                         ╱────────────╲ ⟋704
  │   décrochage     │                       ╱    τ₂       ╲
  │      et          ├──────┐               │   écoulé ?    ├────────┐
   ╲  d'occupation  ╱       │                ╲             ╱         │
    ╲──────────────╱        │         ┌───────╲───────────╱          │
          │                 │         │                               │
          ▼                 ▼         ▼                               ▼
   ╱──────────────╲ ⟋710  ┌──────────────┐⟋709              ╭──────────╮
  ╱ compte de      ╲      │Compte décrochage│               │  LIBE-   │
 │ décrochage et    │     │ et d'occupation │               │  RATION  │
 │ d'occupation     ├─┐   │   sur "80"      │               │  Fig. 5  │
  ╲  >400ms        ╱  │   └──────────────┘                  ╰──────────╯
   ╲──────────────╱   │
          │           │  ⟋711
          ▼           │
   ┌──────────────┐   │
   │    "OB"      │   │
   │  dans  CLW   │   │
   └──────────────┘   │
          │           │
          ▼           ▼
     ╭────────╮   ╭────────╮
     │  ILI   │   │  LP61  │
     │ Fig.1  │   │ Fig. 6 │
     ╰────────╯   ╰────────╯
```

$\tau_2$

Haut-parleur en service ⟋705

LP70 ⟋706

SILENCE    ACQUISITION STATUT ⟋707    TONALITE

LP8 Fig. 8          LP9 Fig.9

FIG. 8

LP 8

E$_0$
mesuré? — 801

E$_0 \geqslant$
T$_{11}$=240ms — 802

<          >

"00"    dans
435 — 803

E$_1$
mesuré ? — 804

Continuation
mesure

S$_1 \geqslant$
T$_{12}$=1,5" — 805

<          >

LP60
Fig.5

LAN2
Fig. 10

LP 10
Fig.10

0011035

FIG. 9

LP 9

901 $S_1$ est-il mesuré ?

On est dans $E_0$

On est dans $E_1$

902 Téléphone? Données?

Mode téléphone

906 $E_i > T_{17}$ =2,5"

Mode données

903 $E_{i'} > T_{17}$ =2,5"

904 "OD" dans CLW

905 CS sur $\mathcal{T}_3 = 4$"

LIBE-RATION Fig.5

LP60 Fig. 6

LPW

FIG.10

FIG.11

Amplitude

35 129

35'

→ temps

$E_0$      $S_1$      $E_1$

"00"   "80"   "00"   "80"   "00"   "80"   "00"

37

FIG. 12

FIG.13

0011035

```
┌──────────────────────────────────────────────────────┐
│ LP0 Marquage de la phase en cours (CLW)              │
│ LP1 à LP5 compte d'essais d'appel                    │
│ LP6 à LP10 compte d'essais d'appel                   │
└──────────────────────────────────────────────────────┘

┌──────────────────────────────────────────────────────┐
│ LP0                                                   │
│ LP1 à LP5 commande emetteur automatique              │
│ LP6 à LP10 - Téléphone - Données                     │
└──────────────────────────────────────────────────────┘

┌──────────────────────────────────────────────────────┐
│ LP0        STATUT                                     │
│ LP1 à LP5:STATUT                                      │
│ LP5 à LP10 compte durée d'occupation                 │
└──────────────────────────────────────────────────────┘

┌──────────────────────────────────────────────────────┐
│ LP0                                                   │
│ LP1 à LP5 durée d'attente  basse                     │
│ LP6 à LP10 durée d'attente  basse                    │
└──────────────────────────────────────────────────────┘

┌──────────────────────────────────────────────────────┐
│ LP0                                                   │
│ LP1 à LP5 durée d'attente  haute                     │
│ LP6 à LP10 durée d'attente  haute                    │
└──────────────────────────────────────────────────────┘

┌──────────────────────────────────────────────────────┐
│ LP0                                                   │
│ LP1 à LP5 compte durée  tonalité                     │
│ LP6 à LP10       $E_0$                                │
└──────────────────────────────────────────────────────┘

┌──────────────────────────────────────────────────────┐
│ LP0              "00"                                  │
│ LP1 à LP5 rang du chiffre                            │
│ LP6 à LP10    $S_1$                                   │
└──────────────────────────────────────────────────────┘

┌──────────────────────────────────────────────────────┐
│ LP0       compte d'essais d'appel                    │
│ LP1 à LP5  chiffre                                    │
│ LP6 à LP10       $E_1$                                │
└──────────────────────────────────────────────────────┘
```

FIG.14

A/ Impulsions de connexion

Impulsions de connexion

751

752

753
753₁

300ms

12ms

753'₂    753₃

Compte
d'occupation
et de décrochage

1

2,3

Analyse téléphone
décroché

Non

B/ Décrochage combiné

décrochage combiné

754₃

300 ms

754₁    754₂    754₄    754ₙ

Compte
d'occupation et
de décrochage

1

2,3,4 . . . . . . . . . . n

Analyse téléphone décroché

Non

Oui

Début
phase ILI

FIG.15

s

Valeurs
acceptées

Valeurs
recommandées

Silence (S)

0    0,67  1    1,5    2    2,5    3         4  s
Emission (E)

CCITT - 1576

Fréquence :

— intervalle recommandé : 400-450 Hz
— intervalle accepté : 340-500 Hz

FIG. 16 (FIGURE 1/E.180 — Tonalité de retour d'appel)

ms

1000

800

$E = \dfrac{E \cdot S}{2} - 250$

$E + S = 1200$

$E \cdot S = 1100$

Valeurs
acceptées

Valeurs
recommandées

Silence (S)

$E = 100$

$E = 0,67 \, S$

600

400

$E = 1,5 \, S$

200

$E \cdot S = 300$

$T_{13} = 200$

0      200      400      600      800      1000    ms

$T_{14} = 240$          Emission (E)    $T_{15} = 660$      CCITT - 1577

Fréquence :

— intervalle recommandé : 400-450 Hz
— intervalle accepté : 340-500 Hz

FIG. 17 (FIGURE 2/E.180 — Tonalité d'occupation (de la ligne du demandé) et tonalité d'encombrement
(de l'équipement ou du faisceau de circuits)

**Office européen
des brevets**

**RAPPORT DE RECHERCHE EUROPEENNE**

0011035

Numéro de la demande

EP 79 40 0803

## DOCUMENTS CONSIDERES COMME PERTINENTS

| Catégorie | Citation du document avec indication, en cas de besoin, des parties pertinentes | Revendication concernée |
|-----------|----------------------------------------------------------------------------------|-------------------------|
| A | <u>FR - A - 2 289 077</u> (INTERNATIONAL STANDARD ELECTRIC) <br> * Page 1, ligne 21 à page 2, ligne 19; figures * <br><br> ---- | 1 |

**CLASSEMENT DE LA DEMANDE (Int. Cl. ³)**

H 04 M   1/274

**DOMAINES TECHNIQUES RECHERCHES (Int. Cl. ³)**

H 04 M   1/274
              1/272
              1/27

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achevement de la recherche | Examinateur |
|----------------------|-----------------------------------|-------------|
| La Haye | 21-01-1980 | DE MUYT |

OEB Form 1503.1   06.78